# EUROPEAN PATENT SPECIFICATION

(11) **EP 4 199 189 B1**
(45) Date of publication and mention of the grant of the patent: **19.11.2025**
(21) Application number: 22811538.2
(22) Date of filing: 12.05.2022
(51) Int. Cl.: H01M 10/635, H01M 50/249, H01M 10/625, H01M 10/6563, H01M 10/6562, H01M 50/375, H01M 10/42, H01M 10/48, H01M 50/204, H01M 50/317

(54) **BATTERY PACK AND VEHICLE COMPRISING THE SAME**
BATTERIEPACK UND FAHRZEUG DAMIT
BLOC-BATTERIE ET VÉHICULE LE COMPRENANT

(30) Priority: 27.05.2021 KR 20210068645
(43) Date of publication of application: 21.06.2023
(73) Proprietor: LG Energy Solution, Ltd., Seoul 07335 (KR)
(72) Inventor: KO, Dong-Wan, Daejeon 34122 (KR)
(74) Representative: Hoffmann Eitle
(86) International application number: PCT/KR2022/006840
(87) International publication number: WO 2022/250345

(56) References cited:
- CN-A- 103 947 035
- CN-B- 102 598 398
- JP-A- 2006 054 150
- JP-A- 2015 222 701
- JP-A- 2016 079 858
- JP-A- H1 186 915
- JP-A- H11 273 982
- KR-A- 20120 069 238
- US-A1- 2006 172 188
- US-B2- 9 211 856

## Description

### TECHNICAL FIELD

The present disclosure relates to a battery pack and a vehicle comprising the same, and more particularly, to a battery pack for preventing condensation due to a temperature difference between the inside and the outside of a pack case and a vehicle comprising the same.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

The lithium secondary battery usually uses a lithium-based oxide and a carbon material for a positive electrode active material and a negative electrode active material, respectively. Additionally, the lithium secondary battery includes an electrode assembly including a positive electrode plate and a negative electrode plate coated with the positive electrode active material and the negative electrode active material, respectively, with a separator interposed between the positive electrode plate and the negative electrode plate, and a packaging or a battery case in which the electrode assembly is hermetically received together with an electrolyte solution.

The lithium secondary batteries may be classified into can-type and pouch-type according to the shape of the battery case. The can-type secondary battery includes a metal can accommodating the electrode assembly, and the pouch-type secondary battery includes a pouch of an aluminum laminate sheet accommodating the electrode assembly.

More recently, there is a growing demand for high capacity battery packs used in electric vehicles. The high capacity battery pack includes a plurality of battery modules, each including secondary battery cells. The high capacity battery pack mounted in electric vehicles may have an increase in temperature difference between the inside and the outside of the battery packs depending on the outdoor environment in which the vehicle drives. When the temperature difference between the inside and the outside of the battery pack is equal to or larger than 15°C, moisture contained in air inside of the battery pack condenses to produce water droplets on the walls of the pack case. The water droplets flow down and stay in the pack case. Due to the produced water in the pack case, an electrical short occurs between the plurality of battery modules, causing thermal runaway of the battery module or electrical fires when electrical wires come in contact with each other between electrical components in the battery pack.

Accordingly, there is a need for an approach to minimize the electrical short or the contact between electrical wires in the battery pack due to the condensation inside the battery pack.

US 9 211 856 B2 concerns a battery for an electric motor of a motor vehicle. The battery has a wall and electrochemical cells/accumulators are included inside the wall. The combination of the wall and an exchanger form a gas-tight and water-tight enclosure. An orifice is made in the wall. The orifice is plugged by a valve. The valve can be selectively closed or opened by means of the command module. When the valve is open, a thermal exchange between the interior of an enclosure and the exterior occurs, and when the valve is closed, the accumulators are kept thermally insulated from the exterior. An electronic control and command module can actuate the opening and closing of the valve as a function of the respective temperatures measured by probes.

CN 1 03 947 035 A concerns a power storage device and battery temperature regulating method. The power storage device includes a case in which at least one unit cell is housed; a heat exchanger that is provided in a wall surface of the case so as to face both an inside of the case and an outside of the case, and that performs heat exchange between the inside of the case and the outside of the case; and a plurality of dividing members that are arranged in an up-down direction inside the case so as to be opened and closed independently of one another, and that divide a space inside the case into a space in which the at least one unit cell is housed and a space in which the heat exchanger is arranged.

CN 102 598 398 B concerns a battery assembly. A battery pack is composed of one battery unit. The battery unit includes two arms configured by electrically connecting a plurality of single cells in series using a bus bar; a battery container that houses the arms; and a cooling unit provided in the battery container. The cooling unit has a fan that exhausts air from the inside of the battery container to the outside; an air supply and exhaust port for supplying or exhausting air between the inside of the battery container and the outside; and an auxiliary air supply and exhaust port, which has an opening and closing mechanism that can adjust the amount of air supply and exhaust, and the control unit and the drive unit adjust the opening degree of the opening and closing mechanism.

### DISCLOSURE

### Technical Problem

The present disclosure is designed to solve the above-described problem, and therefore the present disclosure is directed to providing a battery pack for preventing condensation due to a temperature difference between the inside and the outside of a pack case and a vehicle comprising the same.

These and other objectives and advantages of the present disclosure can be understood by the following description, and will be apparent from the embodiments of the present disclosure. In addition, it will be readily appreciated that the objectives and advantages of the present disclosure can be realized by the means set forth in the appended claims.

### Technical Solution

To solve the above-described technical problem, a battery pack according to an aspect of the present invention, which is defined in claim 1, includes at least one battery module; a pack case accommodating the at least one battery module, the pack case having at least one air hole to allow air to flow in and out; a control unit configured to determine whether to open or close the air hole according to a temperature difference between inside and outside of the pack case; and a ventilation unit configured to open or close the air hole in response to a control signal from the control unit.

The ventilation unit includes a packing member having a size that is equal to or larger than the air hole to close the air hole; and a transport member configured to transport the packing member toward or away from the air hole in response to the control signal from the control unit.

The transport member includes an electric motor configured to operate in response to the control signal from the control unit; and a transport gear configured to transport the packing member toward or away from the air hole by a rotational force transmitted from the electric motor.

A first toothed wheel is at a rotating shaft of the electric motor, the transport gear includes a body extended in a direction and having a screw thread on an outer surface, and a second toothed wheel at an end of the body, the second toothed wheel engaged with the first toothed wheel, the packing member has a screw hole into which the body is inserted, the screw hole having a screw thread on an inner surface.

The ventilation unit further includes a fixing member to fix part of the packing member to prohibit the packing member from making a rotational movement.

The battery pack further includes an internal temperature sensor to detect an internal temperature of the pack case; and an external temperature sensor to detect a temperature of air outside of the pack case, and the control unit is configured to transmit a first control signal to the ventilation unit to enable the ventilation unit to open the air hole when a difference between the internal temperature of the pack case measured by the internal temperature sensor and the external temperature of the pack case measured by the external temperature sensor is equal to or larger than a predetermined level.

A battery pack according to another aspect of the present invention, which is defined in claim 2, includes at least one battery module; a pack case accommodating the at least one battery module, the pack case having at least one air hole to allow air to flow in and out; a control unit configured to determine whether to open or close the air hole according to a temperature difference between inside and outside of the pack case; and a ventilation unit configured to open or close the air hole in response to a control signal from the control unit.

The ventilation unit includes a packing member having a size that is equal to or larger than the air hole to close the air hole; and a transport member configured to transport the packing member toward or away from the air hole in response to the control signal from the control unit.

The transport member includes a cylinder configured to push a shaft outwards or pull the shaft inwards in response to the control signal from the control unit; and a packing fixing portion at an end of the shaft of the cylinder to fix the packing member.

The battery pack further includes an internal temperature sensor to detect an internal temperature of the pack case; and an external temperature sensor to detect a temperature of air outside of the pack case, and the control unit is configured to transmit a first control signal to the ventilation unit to enable the ventilation unit to open the air hole when a difference between the internal temperature of the pack case measured by the internal temperature sensor and the external temperature of the pack case measured by the external temperature sensor is equal to or larger than a predetermined level.

The control unit may be configured to transmit the first control signal to the ventilation unit to enable the ventilation unit to open the air hole, and after a predetermined time, transmit a second control signal to enable the ventilation unit to close the air hole.

The battery pack may further include a fan configured to transport air inside of the pack case.

The pack case may have at least two air holes, and the fan may be configured to transport the air inside of the pack case to force the air out through any one of the at least two air holes.

According to still another aspect of the present invention, there is provided a vehicle including the above battery pack, as defined in claim 6.

### Advantageous Effects

According to an aspect of the present invention, since the present invention includes the control unit to determine whether to open or close the air hole according to the temperature difference between the inside and the outside of the pack case; and the ventilation unit to open or close the air hole in response to the control signal from the control unit, when condensation occurs, i.e., water vapor in air inside of the pack case condenses into water due to the temperature difference between the inside and the outside of the pack case, it is possible to dry out the produced water by opening the air hole to ventilate the pack case through the control of the control unit and the operation of the ventilation unit.

Accordingly, the present invention may prevent the contact between electrical wires or an electrical short from occurring in the battery module, the battery cell and the electrical component within the battery pack due to the produced moisture in the pack case.

### DESCRIPTION OF DRAWINGS

FIG. 1 is a perspective view schematically showing a battery pack according to an embodiment of the present disclosure.
FIG. 2 is a diagram schematically showing the inner parts of a battery pack according to an embodiment of the present disclosure.
FIG. 3 is a partial enlarged diagram schematically showing some of the inner parts of a battery pack according to an embodiment of the present disclosure.
FIG. 4 is a diagram schematically showing the inner parts of a battery pack according to another embodiment of the present disclosure.
FIGS. 5 and 6 are diagrams schematically showing some of the inner parts of a battery pack according to still another embodiment of the present disclosure.
FIG. 7 is a diagram schematically showing the inner parts of a battery pack according to yet another embodiment of the present disclosure.
FIG. 8 is a diagram schematically showing the inner parts of a battery pack according to a further another embodiment of the present disclosure.
FIG. 9 is a perspective view schematically showing a vehicle according to an embodiment of the present disclosure.

### BEST MODE

Hereinafter, the exemplary embodiment of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just an exemplary embodiment of the present disclosure, but not intended to fully describe the technical aspects of the present disclosure, so it should be understood that a variety of other equivalents and modifications could have been made thereto at the time that the application was filed.

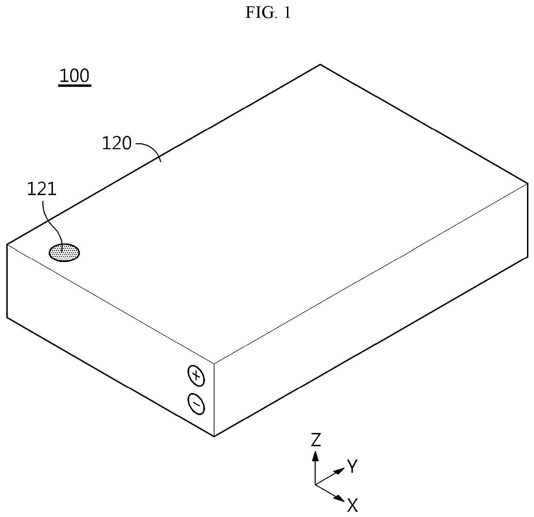

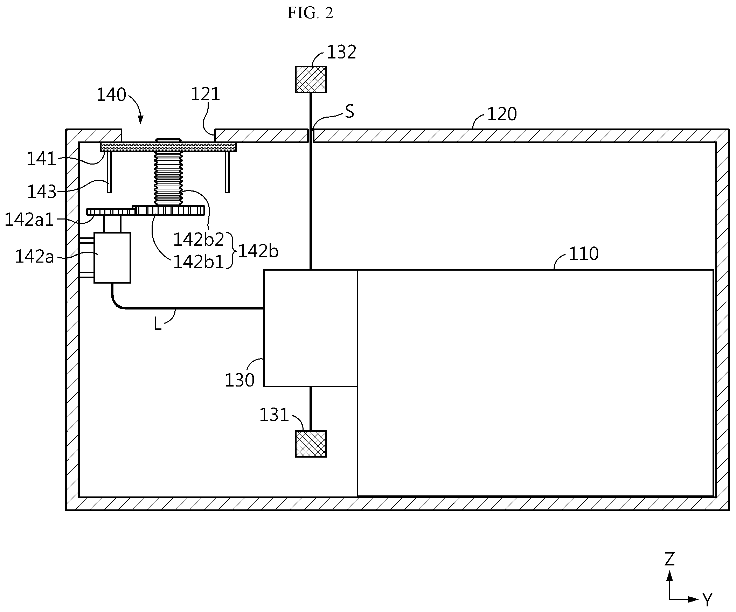

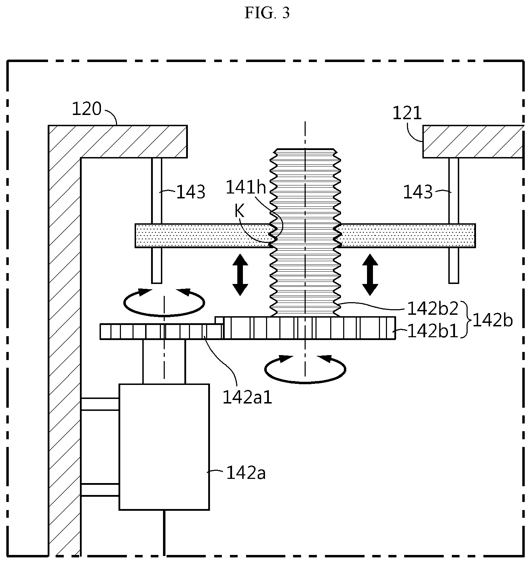

FIG. 1 is a perspective view schematically showing a battery pack according to an embodiment of the present disclosure. FIG. 2 is a diagram schematically showing the inner parts of the battery pack according to an embodiment of the present disclosure. Additionally, FIG. 3 is a partial enlarged diagram schematically showing some of the inner parts of the battery pack according to an embodiment of the present disclosure. For reference, in FIG. 1, the X axis direction is the right direction, the Y axis direction is the rear direction and the Z axis direction is the up direction.

Referring to FIGS. 1 to 3, the battery pack 100 according to an embodiment of the present invention includes at least one battery module 110, a pack case 120, a control unit 130 and a ventilation unit 140.

Specifically, the battery module 110 may include a plurality of battery cells (not shown) and a module case accommodating the plurality of battery cells (not shown).

Here, the battery cells may include, for example, pouch-type battery cells that have high energy density and are easy to stack. The pouch-type battery cells may be stacked to form a battery cell group. The battery cells may have electrode leads at left and right ends. However, as opposed to this embodiment, the battery cells of the present disclosure are not limited to the pouch-type battery cells, and prismatic battery cells of rectangular prism shape or cylindrical battery cells may be used.

Although not shown in the drawings, the plurality of battery cells may be electrically connected by a busbar including an electrically conductive metal. The busbar may have a metal rod or metal plate shape. The busbar may include any known common connection member configured to electrically connect the plurality of battery cells. Its description is omitted.

Furthermore, the module housing is the component used to receive the plurality of battery cells (not shown), and may be formed with a hermetic structure using a material having high mechanical strength to protect the plurality of battery cells from external physical and chemical factors. For example, the module housing of the battery module 110 may be coupled to the pack case 120 by bolting and/or welding.

Additionally, the pack case 120 is configured to accommodate the at least one battery module 110 therein. The pack case 120 may be formed with a hermetic structure using a material having high mechanical strength to protect the battery module 110 and the control unit 130 from external physical and chemical factors. The pack case 120 has at least one air hole 121 to allow air to flow in and out. For example, as shown in FIGS. 1 and 2, the pack case 120 may have one air hole 121 on top of the pack case 120 to allow air to flow in and out. The opening shape of the air hole 121 is not limited to a particular shape, but may be, for example, a circular or square shape.

Further, the control unit 130 is configured to determine whether to open or close the air hole 121 according to a temperature difference between the inside and the outside of the pack case 120. For example, when the temperature difference between the inside and the outside of the pack case 120 is equal to or larger than 15°C, the control unit 130 may be configured to transmit a control signal to the ventilation unit 140 to enable the ventilation unit 140 to open the air hole 121. However, the range of the temperature difference is not necessarily limited to 15°C or above, and the internal and external environmental factors (for example, temperature, humidity) of the battery pack 100 may be considered when determining whether to open or close the air hole 121. The control unit 130 may include a memory chip to store the collected temperature information. The control unit 130 may include a microcontroller to determine whether to open or close the air hole 121 according to the size of the temperature difference. The control unit 130 may include a communication unit to transmit the control signal to the ventilation unit 140. The communication unit may perform wireless communication or wired communication using a communication line L.

Additionally, the ventilation unit 140 may be configured to directly close the air hole 121 in response to the control signal from the control unit 130. The ventilation unit 140 may be configured to directly open the air hole 121 in response to the control signal from the control unit 130. The method for closing the air hole 121 is not limited to a particular method, and may include any method for closing the air hole 121.

According to this configuration of the present invention, since the present invention includes the control unit 130 to determine whether to open or close the air hole 121 according to the temperature difference between the inside and the outside of the pack case 120; and the ventilation unit 140 to open or close the air hole 121 in response to the control signal from the control unit 130, when condensation occurs, i.e., water vapor in air inside of the pack case 120 condenses into water due to the temperature difference between the inside and the outside of the pack case 120, it is possible to dry out the produced water by opening the air hole 121 to ventilate the pack case 120 through the control of the control unit 130 and the operation of the ventilation unit 140. Accordingly, the present invention may prevent the contact between electrical wires or an electrical short from occurring in the battery module 110, the battery cell and the electrical component in the battery pack 100 due to the produced moisture (water) in the pack case 120.

Furthermore, when the ventilation unit 140 opens the air hole 121, the battery pack 100 of the present invention may allow outdoor air to flow in through the air hole 121 of the pack case 120 and air inside of the pack case 120 to flow out through the air hole 121, thereby reducing the temperature difference between the inside and the outside of the pack case 120, and thus preventing any further condensation from occurring in the pack case 120.

Referring back to FIGS. 1 to 3, the ventilation unit 140 of the battery pack 100 of the present invention includes a packing member 141 and a transport member 142. The packing member 141 may be configured to close the air hole 121. The size of the packing member 141 is equal to or larger than the size of the air hole 121. The material of the packing member 141 may include synthetic rubber or natural rubber. For example, the packing member 141 may be ethylene propylene rubber. When the air hole 121 is, for example, circular, the packing member 141 may have a disc shape having a predetermined thickness. However, the shape of the packing member 141 is not limited to a particular shape, and the shape of the packing member 141 may be set according to the shape of the air hole 121. That is, the packing member 141 may have any shape that closes (covers) the air hole 121.

Additionally, the transport member 142 is configured to operate in response to the control signal from the control unit 130. The transport member 142 may receive the control signal from the control unit 130 to transport the packing member 141 toward the air hole 121. The transport member 142 may receive the control signal from the control unit 130 to transport the packing member 141 in a direction facing away from the air hole 121. That is, the packing member 141 may be transported by the transport member 142 to bring it into close contact with the air hole 121 or move it away from the air hole 121. For example, the transport member 142 may include a receiver to receive a communication signal from the control unit 130.

According to this configuration of the present invention, since the present invention includes the ventilation unit 140 including the packing member 141 and the transport member 142, the air hole 121 of the pack case 120 may be opened or closed according to the temperature difference between the inside and the outside of the pack case 120. Accordingly, when the ventilation unit 140 opens the air hole 121, the battery pack 100 of the present invention may allow outdoor air to flow in through the air hole 121 of the pack case 120 and air inside of the pack case 120 to flow out through the air hole 121, thereby reducing the temperature difference between the inside and the outside of the pack case 120, and thus preventing any further condensation from occurring in the pack case 120.

Referring back to FIGS. 1 to 3, the transport member 142 of the ventilation unit 140 of the battery pack 100 of the present invention includes an electric motor 142a and a transport gear 142b. The electric motor 142a is configured to operate in response to the control signal (an electrical signal) from the control unit 130. For example, the electric motor 142a may be a servo motor that operates according to the control signal of the control unit 130. The electric motor 142a may have a rotating shaft configured to make rotational movement when power is supplied.

Additionally, the transport gear 142b is configured to transport the packing member 141 toward the air hole 121 by a rotational force transmitted from the electric motor 142a. The transport gear 142b may be configured to transport the packing member 141 in the direction facing away from the air hole 121 by the rotational force transmitted from the electric motor 142a. For example, when the rotating shaft of the electric motor 142a rotates in the counterclockwise direction, the transport gear 142b may transport the packing member 141 toward the air hole 121. When the rotating shaft of the electric motor 142a rotates in the clockwise direction, the transport gear 142b may transport the packing member 141 in the direction facing away from the air hole 121.

According to this configuration of the present invention, since the present invention includes the electric motor 142a and the transport gear 142b, it is easy to control the opening/closing of the air hole 121 according to the electrical signal from the control unit 130.

Furthermore, a first toothed wheel 142a1 is at the rotating shaft of the electric motor 142a. The first toothed wheel 142a1 may have a disc shape. The first toothed wheel 142a1 may rotate in the clockwise direction or the counterclockwise direction by the rotation of the rotating shaft.

Additionally, the transport gear 142b includes a body 142b2 extended in a direction. The body 142b2 has a screw thread on the outer surface. The screw thread may be a male thread. A second toothed wheel 142b1 is at one end of the body 142b2. The second toothed wheel 142b1 is engaged with the first toothed wheel 142a1. For example, when the first toothed wheel 142a1 rotates in the clockwise direction, the second toothed wheel 142b1 may rotate in the counterclockwise direction. On the contrary, when the first toothed wheel 142a1 rotates in the counterclockwise direction, the second toothed wheel 142b1 may rotate in the clockwise direction. The transport gear 142b may only allow a rotational motion, and the position of the transport gear 142b may be fixed. For example, the transport gear 142b may include a fixing member including a ring around the outer surface of the body 142b2. The ring may be configured to allow the rotational movement of the transport gear 142b and limit the movement of the position of the transport gear 142b.

Further, the packing member 141 has a screw hole 141h into which the body 142b2 is inserted. The screw hole 141h has a screw thread on the inner surface. The screw thread may be a female thread. For example, when the body 142b2 of the transport gear 142b rotates in the counterclockwise direction, the packing member 141 may move to the air hole 121 along the outer surface of the body 142b2 of the transport gear 142b. When the body 142b2 of the transport gear 142b rotates in the clockwise direction, the packing member 141 may move in the direction facing away from the air hole 121 along the screw thread on the outer surface of the body 142b2 of the transport gear 142b. However, the present disclosure is not necessarily limited to this method, and the transportation direction may change depending on the type of the screw, for example, a right screw or a left screw.

Additionally, the ventilation unit 140 may further include the fixing member 143 to fix part of the packing member 141. The fixing member 143 may be configured to prohibit the rotational movement of the packing member 141. For example, as shown in FIG. 3, the fixing member 143 may include two fixing pins. Each of the two fixing pins may be, at one end, fixed to the pack case 120. Each of the two fixing pins may be configured to pass through the packing member 141. That is, the packing member 141 may be configured to move up and down along the outer surface of the fixing pin. In other words, when the packing member 141 is transported toward the air hole 121 along the screw thread of the body 142b2 of the transport gear 142b, the packing member 141 may be moved to the air hole 121 along the outer surface of the two fixing pins. On the contrary, when the packing member 141 is transported in the direction facing away from the air hole 121 by the transport gear 142b, the packing member 141 may be moved away from the air hole 121 along the outer surface of the two fixing pins. That is, the two fixing pins may be configured to allow the packing member 141 to move in two directions, but prohibit the packing member 141 from making rotational movement when the packing member 141 receives the rotational force from the transport gear 142b. Although the fixing pin has been described as an embodiment of the fixing member 143, the fixing member 143 is not necessarily limited to this configuration, and may include any fixing member configured to prohibit the packing member 141 from making rotational movement but allow the packing member 141 to move closer to the air hole 121 or away from the air hole 121.

According to this configuration of the present invention, since the present invention includes the first toothed wheel 142a1 at the rotating shaft of the electric motor 142a, the transport gear 142b including the body 142b2 extended in a direction and having the screw thread on the outer surface, and the second toothed wheel 142b1 engaged with the first toothed wheel 142a1 at one end of the body 142b2, the packing member 141 having the screw hole 141h into which the body 142b2 is inserted and having the screw thread on the inner surface, and the ventilation unit 140 which may further include the fixing member 143 to fix part of the packing member 141 to prohibit the packing member 141 from making rotational movement, it is possible to precisely transport the packing member 141 using the transport member 142. Accordingly, the present invention may precisely control the opening/closing of the air hole 121 of the pack case 120, and reduce malfunctions. Ultimately, the present invention may effectively prevent the contact between electrical wires or an electrical short from occurring in the battery module 110, the battery cell and the electrical component within the battery pack 100 due to condensation in the battery pack 100.

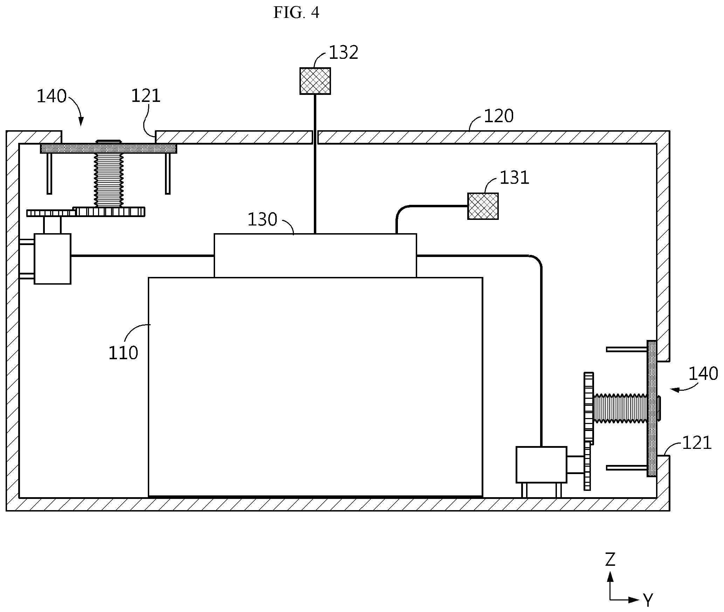

FIG. 4 is a diagram schematically showing the inner parts of a battery pack according to another embodiment of the present invention.

Referring to FIG. 4, as opposed to the battery pack 100 of FIG. 2, the battery pack 100 according to another embodiment of the present invention may have two air holes 121 of the pack case 120. Additionally, as opposed to the battery pack 100 of FIG. 2, the battery pack 100 may include two ventilation units 140. The components of the battery pack 100 of FIG. 4 may be the same as those of the battery pack 100 of FIG. 2, only different in position.

Specifically, the battery pack 100 according to another embodiment of the present invention may have the two air holes 121 at the top and the rear end of the pack case 120, respectively. The two ventilation units 140 may close each of the two air holes 121 in response to the control signal from the control unit 130. Alternatively, the two ventilation units 140 may be configured to open each of the two air holes 121 in response to the control signal from the control unit 130. In this instance, when the two air holes 121 are opened by the ventilation unit 140, any one of the two air holes 121 may be configured to allow air outside of the pack case 120 to flow in. Additionally, the remaining air hole 121 may act as a passage through which air inside of the pack case 120 flows out.

According to this configuration of the present invention, since the battery pack 100 of the present invention includes the two air holes 121 and the two ventilation units 140 to open or close each of the two air holes 121, it is possible to allow air to flow into and out of the pack case 120 more smoothly. Accordingly, the battery pack 100 of the present invention may ventilate the pack case 120 faster, thereby allowing moisture produced by condensation out fast or preventing condensation from progressing.

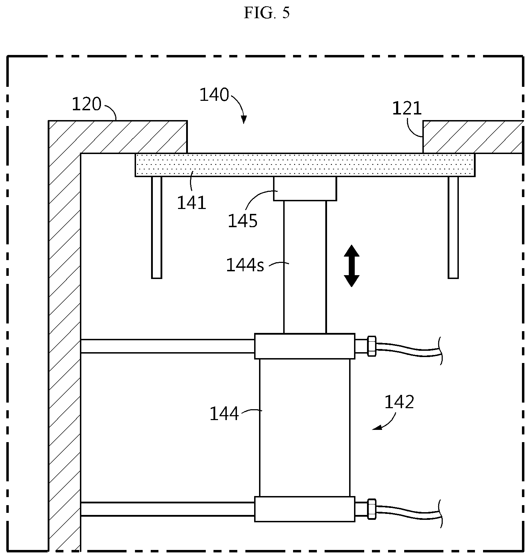

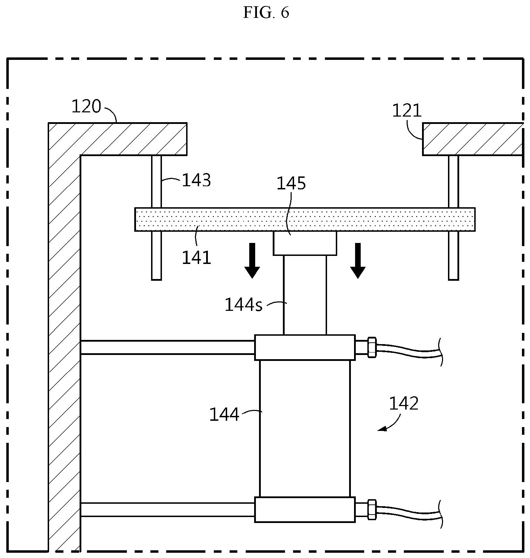

FIGS. 5 and 6 are diagrams schematically showing some of the inner parts of a battery pack according to still another embodiment of the present invention.

Referring to FIGS. 5 and 6, as opposed to the battery pack 100 of FIG. 2, the battery pack 100 according to still another embodiment of the present invention includes a cylinder 144 and a packing fixing portion 145 as the transport member 142. That is, the battery pack 100 of FIG. 5 does not include the electric motor 142a and the transport gear 142b of the battery pack 100 of FIG. 2. The remaining components of the battery pack 100 according to still another embodiment of the present invention may be the same as those of the battery pack 100 of FIG. 2.

Specifically, the cylinder 144 may be configured to push a shaft outwards according to the control signal from the control unit 130. The cylinder 144 may be configured to pull the shaft inwards according to the control signal from the control unit 130. That is, when the temperature difference between the inside and the outside of the pack case 120 is equal to or larger than the predetermined level, the control unit 130 may be configured to transmit the control signal to the ventilation unit 140 to enable the cylinder 144 pull the shaft inwards. In this instance, the packing member 141 may be transported in the direction facing away from the air hole 121. On the contrary, when the temperature difference between the inside and the outside of the pack case 120 is lower than the predetermined level, the control unit 130 may transmit the control signal to the ventilation unit 140 to enable the cylinder 144 to push the shaft outwards. In this instance, the packing member 141 may be transported toward the air hole 121 to close the air hole 121.

Additionally, the packing fixing portion 145 is at the end of the shaft of the cylinder 144. The packing fixing portion 145 is configured to fix the packing member 141. For example, the end of the packing fixing portion 145 may be fixed to one side of the packing member 141. The end of the packing fixing portion 145 may be attached to the packing member 141 using an adhesive. That is, the packing member 141 attached to the packing fixing portion 145 at the end of the shaft of the cylinder 144 may be transported by the movement of the shaft of the cylinder 144.

According to this configuration of the present invention, since the transport member 142 of the battery pack 100 of the present invention includes the cylinder 144 and the packing fixing portion 145, it is possible to effectively control the opening/closing of the air hole 121 of the pack case 120 by the control of the ventilation unit 140 by the control unit 130. Accordingly, the present invention may precisely control the opening/closing of the air hole 121 of the pack case 120, and reduce malfunctions. Ultimately, the present invention may effectively prevent the contact between electrical wires or an electrical short from occurring in the battery module 110, the battery cell and the electrical component within the battery pack 100 due to condensation in the battery pack 100.

Referring back to FIG. 2, the battery pack 100 according to an embodiment of the present invention may include an internal temperature sensor 131 and an external temperature sensor 132. The internal temperature sensor 131 may be a sensor to detect the temperature of air inside of the pack case 120. The internal temperature sensor 131 may be disposed in the pack case 120. The internal temperature sensor 131 may have a resistance of a predetermined value according to the detected temperature. The control unit 130 may read the predetermined resistance value of the internal temperature sensor 131 through an electrical wire in which electric current flows. The internal temperature sensor 131 may be a resistance temperature sensor.

Additionally, the external temperature sensor 132 may be configured to detect the temperature of air outside of the pack case 120. The external temperature sensor 132 may be disposed outside of the pack case 120. The external temperature sensor 132 may have a resistance of a predetermined value according to the detected temperature. The control unit 130 may read the predetermined resistance value of the external temperature sensor 132 through an electrical wire in which electric current flows. The external temperature sensor 132 may be a resistance temperature sensor. The electrical wire may electrically connect the external temperature sensor 132 to the control unit 130 through a small hole of the pack case 120.

Furthermore, when the difference between the temperature of air inside of the pack case 120 measured by the internal temperature sensor 131 and the temperature of air outside of the pack case 120 measured by the external temperature sensor 132 is equal to or larger than the predetermined level, the control unit 130 may be configured to transmit a first control signal to the ventilation unit 140 to enable the ventilation unit 140 to open the air hole 121. For example, when the difference in temperature measured by each of the internal temperature sensor 131 and the external temperature sensor 132 is equal to or larger than 15°C, the control unit 130 may be configured to transmit the first control signal to the ventilation unit 140 to open the air hole 121. However, the range of the temperature difference is not necessarily limited to 15°C or above, and the internal and external environmental factors (for example, temperature, humidity) of the battery pack 100 may be considered when determining whether to open or close the air hole 121.

Additionally, a predetermined time after transmitting the first control signal to enable the ventilation unit 140 to open the air hole 121, the control unit 130 may be configured to transmit a second control signal to enable the ventilation unit 140 to close the air hole 121. For example, 10 minutes after transmitting the first control signal to enable the ventilation unit 140 to open the air hole 121, the control unit 130 may transmit the second control signal to the ventilation unit 140 again to enable the ventilation unit 140 to close the air hole 121. That is, the control unit 130 may perform control to close the air hole 121 to prevent outdoor air from entering the pack case 120 during normal operation. However, when the temperature difference between the inside and the outside of the pack case 120 is equal to or larger than the predetermined level, the control unit 130 may determine that condensation occurred, and transmit the control signal to the ventilation unit 140 to open the air hole 121.

Additionally, the period of time during which the ventilation unit 140 keeps the air hole 121 open may change depending on the size of the temperature difference between the inside and the outside of the pack case 120. For example, the control unit 130 may perform control to keep the air hole 121 open for a longer time as the temperature difference between the inside and the outside of the pack case 120 is larger.

According to this configuration of the present invention, since the control unit 130 of the battery pack 100 of the present invention is configured to transmit the first control signal to enable the ventilation unit 140 to open the air hole 121, and after the predetermined time, transmit the second control signal to enable the ventilation unit 140 to close the air hole 121, the control unit 130 may properly control the period of time during which the air hole 121 of the pack case 120 is open, thereby effectively releasing moisture produced by condensation from the pack case 120. Additionally, the present invention may properly reduce the temperature difference between the inside and the outside of the pack case 120.

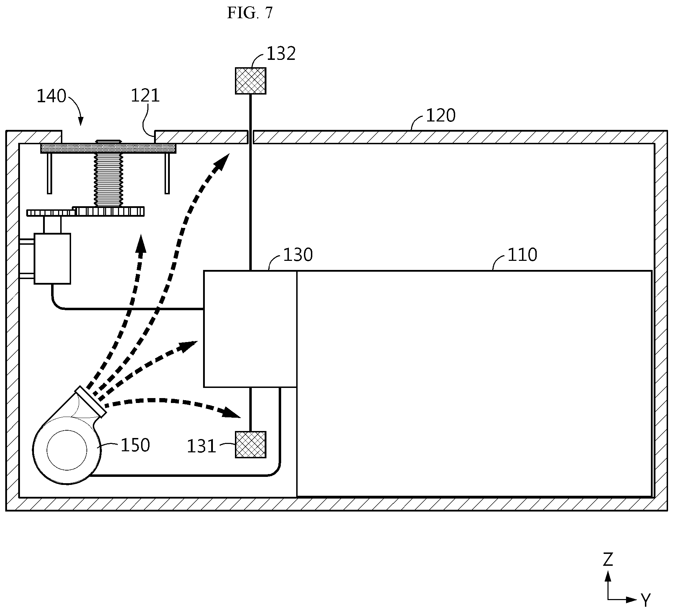

FIG. 7 is a diagram schematically showing the inner parts of a battery pack according to yet another embodiment of the present invention.

Referring to FIG. 7, when compared with the battery pack 100 of FIG. 2, the battery pack 100 according to yet another embodiment of the present invention may further include a fan 150. The remaining components of the battery pack 100 of FIG. 7 may be the same as those of the battery pack 100 of FIG. 2.

Specifically, the fan 150 may be configured to transport air inside of the pack case 120. For example, as shown in FIG 7, the fan 150 may blow air inside of the pack case 120 to allow the air to circulate. That is, the fan 150 may minimize the dead space in which air inside of the pack case 120 does not circulate. When the temperature difference between the inside and the outside of the pack case 120 is equal to or larger than the predetermined level, the control unit 130 may be configured to allow the fan 150 to blow air inside of the pack case 120. That is, when the control unit 130 controls the ventilation unit 140 to open the air hole 121, the control unit 130 may operate the fan 150 to circulate air inside of the pack case 120. In this instance, air inside of the pack case 120 containing moisture may exit the air hole 121.

According to this configuration of the present invention, since the present invention further includes the fan 150, it is possible to effectively remove moisture at the corners (the edges) of the pack case 120. Additionally, it is possible to release moisture into the atmosphere through the air hole 121 quickly by accelerating the flow rate of air in the pack case 120. Additionally, the fan 150 may force water vapor out through the air hole 121 after converting the water droplets in the pack case 120 produced by condensation to the water vapor fast (evaporation).

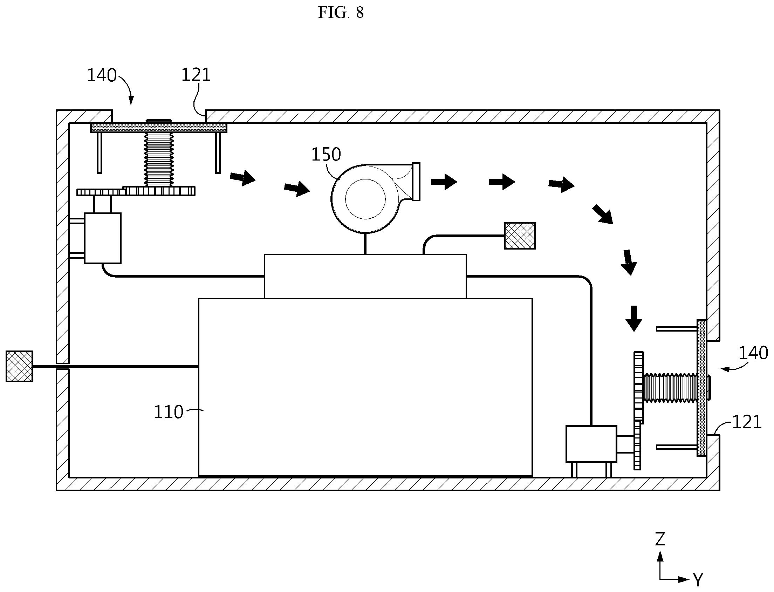

FIG. 8 is a diagram schematically showing the inner parts of the battery pack 100 according to a further another embodiment of the present invention.

Referring to FIG. 8, when compared with the battery pack 100 of FIG. 7, the battery pack 100 according to a further another embodiment of the present invention may have two air holes 121 in the pack case 120. The remaining components of the battery pack 100 of FIG. 8 are similar to those of the battery pack 100 of FIG. 7, only different in positional characteristics and size.

Specifically, the pack case 120 may have at least two air holes 121. The fan 150 may be configured to transport air inside of the pack case 120 to force the air out through any one of the at least two air holes 121. For example, as shown in FIG 8, the battery pack 100 of the present invention may have the air holes 121 at the top and the rear end of the pack case 120, respectively. The fan 150 may blow air inside of the pack case 120 to force the air out through the air hole 121 at the rear end among the two air holes 121.

According to this configuration of the present invention, since the present invention includes the fan 150 configured to transport air inside of the pack case 120 to force the air out through any one of the at least two air holes 121, one air hole 121 may be configured to allow the flow of air from the outside to the inside of the pack case 120 and the other air hole 121 may be configured to allow the flow of air from the inside to the outside of the pack case 120, thereby removing moisture in the pack case 120 quickly and reducing the temperature difference between the inside and the outside of the pack case 120 quickly. Accordingly, the battery pack 100 of the present invention may remove moisture produced by condensation in the battery pack 100, thereby preventing an internal short circuit or the contact between electrical wires in the battery module 110 due to the moisture. Additionally, the battery pack 100 of the present invention may prevent the temperature difference between the inside and the outside of the pack case 120 from increasing to above the predetermined level, thereby preventing condensation.

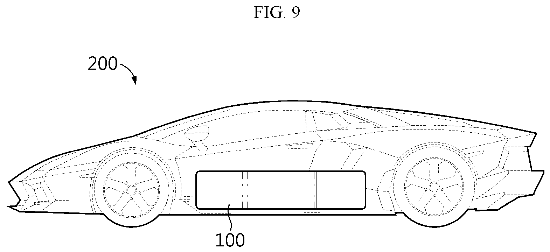

FIG. 9 is a perspective view schematically showing a vehicle according to an embodiment of the present invention.

Referring to FIG. 9 together with FIG. 1, the vehicle 200 according to an embodiment of the present invention includes at least one battery pack 100. The vehicle may include, for example, a vehicle body in which the battery pack 100 including at least one battery module (not shown) is mounted. For example, the vehicle may be an electric vehicle, an electric scooter, an electric wheelchair or an electric bike.

Referring to FIG. 9 together with FIG. 1, the vehicle 200 according to an embodiment of the present invention includes at least one battery pack 100. The vehicle may include, for example, a vehicle body in which the battery pack 100 including at least one battery module (not shown) is mounted. For example, the vehicle may be an electric vehicle, an electric scooter, an electric wheelchair or an electric bike.

Meanwhile, the terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the scope of the appended claims.

## Claims

1. A battery pack (100), comprising:
at least one battery module (110);
a pack case (120) accommodating the at least one battery module (110), the pack case (120) having at least one air hole (121) to allow air to flow in and out;
a control unit (130) configured to determine whether to open or close the air hole (121) according to a temperature difference between inside and outside of the pack case (120); and
a ventilation unit (140) configured to open or close the air hole (121) in response to a control signal from the control unit (130),
wherein the ventilation unit (140) includes:
a packing member (141) having a size that is equal to or larger than the air hole (121) to close the air hole (121); and
a transport member (142) configured to transport the packing member (141) toward or away from the air hole (121) in response to the control signal from the control unit (130),
**characterized in that** the transport member (142) includes:
an electric motor (142a) configured to operate in response to the control signal from the control unit (130); and
a transport gear (142b) configured to transport the packing member (141) toward or away from the air hole (121) by a rotational force transmitted from the electric motor (142a),
wherein a first toothed wheel (142a1) is at a rotating shaft of the electric motor (142a),
wherein the transport gear (142b) includes a body (142b2) extended in a direction and having a screw thread on an outer surface, and a second toothed wheel (142b1) at an end of the body (142b2), the second toothed wheel (142b1) engaged with the first toothed wheel (142a1),
wherein the packing member (141) has a screw hole (141h) into which the body (142b2) is inserted, the screw hole (141h) having a screw thread on an inner surface,
wherein the ventilation unit (140) further includes a fixing member (143) to fix part of the packing member (141) to prohibit the packing member (141) from making a rotational movement, and
wherein the battery pack (100) further comprises:
an internal temperature sensor (131) to detect an internal temperature of the pack case (120); and
an external temperature sensor (132) to detect a temperature of air outside of the pack case (120),
wherein the control unit (130) is configured to transmit a first control signal to the ventilation unit (140) to enable the ventilation unit (140) to open the air hole (121) when a difference between the internal temperature of the pack case (120) measured by the internal temperature sensor (131) and the external temperature of the pack case (120) measured by the external temperature sensor (132) is equal to or larger than a predetermined level.

2. A battery pack (100), comprising:
at least one battery module (110);
a pack case (120) accommodating the at least one battery module (110), the pack case (120) having at least one air hole (121) to allow air to flow in and out;
a control unit (130) configured to determine whether to open or close the air hole (121) according to a temperature difference between inside and outside of the pack case (120); and
a ventilation unit (140) configured to open or close the air hole (121) in response to a control signal from the control unit (130),
wherein the ventilation unit (140) includes:
a packing member (141) having a size that is equal to or larger than the air hole (121) to close the air hole (121); and
a transport member (142) configured to transport the packing member (141) toward or away from the air hole (121) in response to the control signal from the control unit (130),
**characterized in that** the transport member (142) includes:
a cylinder (144) configured to push a shaft outwards or pull the shaft inwards in response to the control signal from the control unit (130); and
a packing fixing portion (145) at an end of the shaft of the cylinder (144) to fix the packing member (141), and
wherein the battery pack (100) further comprises:
an internal temperature sensor (131) to detect an internal temperature of the pack case (120); and
an external temperature sensor (132) to detect a temperature of air outside of the pack case (120),
wherein the control unit (130) is configured to transmit a first control signal to the ventilation unit (140) to enable the ventilation unit (140) to open the air hole (121) when a difference between the internal temperature of the pack case (120) measured by the internal temperature sensor (131) and the external temperature of the pack case (120) measured by the external temperature sensor (132) is equal to or larger than a predetermined level.

3. The battery pack (100) according to claim 1 or claim 2, wherein the control unit (130) is configured to transmit the first control signal to the ventilation unit (140) to enable the ventilation unit (140) to open the air hole (121), and after a predetermined time, transmit a second control signal to enable the ventilation unit (140) to close the air hole (121).

4. The battery pack (100) according to claim 1 or claim 2, further comprising: a fan (150) configured to transport air inside of the pack case (120).

5. The battery pack (100) according to claim 4, wherein the pack case (120) has at least two air holes (121), and
wherein the fan (150) is configured to transport the air inside of the pack case (120) to force the air out through any one of the at least two air holes (121).

6. A vehicle (200) comprising the battery pack (100) according to any one of claims 1 to 5.

## Patentansprüche

1. Batteriepack (100), umfassend:
mindestens ein Batteriemodul (110);
ein Packgehäuse (120), in dem das mindestens eine Batteriemodul (110) untergebracht ist, wobei das Packgehäuse (120) mindestens ein Luftloch (121) aufweist, um zu ermöglichen, dass Luft ein- und ausströmen kann;
eine Steuereinheit (130), die dazu konfiguriert ist, gemäß einem Temperaturunterschied zwischen dem Inneren und dem Äußeren des Packgehäuses (120) zu bestimmen, ob das Luftloch (121) geöffnet oder geschlossen werden soll; und
eine Belüftungseinheit (140), die dazu konfiguriert ist, das Luftloch (121) als Reaktion auf ein Steuersignal von der Steuereinheit (130) zu öffnen oder zu schließen,
wobei die Belüftungseinheit (140) einschließt:
ein Dichtungselement (141), das eine Größe aufweist, die gleich oder größer ist als das Luftloch (121), um das Luftloch (121) zu schließen; und
ein Transportelement (142), das dazu konfiguriert ist, das Dichtungselement (141) als Reaktion auf das Steuersignal von der Steuereinheit (130) zu dem Luftloch (121) hin oder von diesem weg zu transportieren,
**dadurch gekennzeichnet, dass** das Transportelement (142) einschließt:
einen Elektromotor (142a), der dazu konfiguriert ist, als Reaktion auf das Steuersignal von der Steuereinheit (130) zu arbeiten; und
ein Transportgetriebe (142b), das dazu konfiguriert ist, das Dichtungselement (141) durch eine vom Elektromotor (142a) übertragene Drehkraft zum Luftloch (121) hin oder von diesem weg zu transportieren,
wobei sich ein erstes Zahnrad (142a1) an einer Drehwelle des Elektromotors (142a) befindet,
wobei das Transportgetriebe (142b) einen Körper (142b2), der sich in eine Richtung erstreckt und ein Schraubgewinde auf einer Außenfläche aufweist, und ein zweites Zahnrad (142b1) an einem Ende des Körpers (142b2) einschließt, wobei das zweite Zahnrad (142b1) mit dem ersten Zahnrad (142a1) in Eingriff steht,
wobei das Dichtungselement (141) ein Schraubenloch (141h) aufweist, in das der Körper (142b2) eingesetzt ist, wobei das Schraubenloch (141h) ein Schraubengewinde an einer Innenfläche aufweist,
wobei die Belüftungseinheit (140) weiter ein Fixierungselement (143) einschließt, um einen Teil des Dichtungselements (141) zu fixieren, um zu verhindern, dass das Dichtungselement (141) eine Drehbewegung ausführt, und
wobei der Batteriepack (100) weiter umfasst:
einen internen Temperatursensor (131), um eine interne Temperatur des Packgehäuses (120) zu erfassen; und
einen externen Temperatursensor (132) zum Erfassen einer Temperatur der Luft außerhalb des Packgehäuses (120),
wobei die Steuereinheit (130) dazu konfiguriert ist, ein erstes Steuersignal an die Belüftungseinheit (140) zu übertragen, um der Belüftungseinheit (140) zu ermöglichen, das Luftloch (121) zu öffnen, wenn ein Unterschied zwischen der von dem internen Temperatursensor (131) gemessenen internen Temperatur des Packgehäuses (120) und der von dem externen Temperatursensor (132) gemessenen externen Temperatur des Packgehäuses (120) gleich oder größer als ein vorbestimmtes Niveau ist.

2. Batteriepack (100), umfassend:
mindestens ein Batteriemodul (110);
ein Packgehäuse (120), in dem das mindestens eine Batteriemodul (110) untergebracht ist, wobei das Packgehäuse (120) mindestens ein Luftloch (121) aufweist, um zu ermöglichen, dass Luft ein- und ausströmen kann;
eine Steuereinheit (130), die dazu konfiguriert ist, gemäß einem Temperaturunterschied zwischen dem Inneren und dem Äußeren des Packgehäuses (120) zu bestimmen, ob das Luftloch (121) geöffnet oder geschlossen werden soll; und
eine Belüftungseinheit (140), die dazu konfiguriert ist, das Luftloch (121) als Reaktion auf ein Steuersignal von der Steuereinheit (130) zu öffnen oder zu schließen,
wobei die Belüftungseinheit (140) einschließt:
ein Dichtungselement (141), das eine Größe aufweist, die gleich oder größer ist als das Luftloch (121), um das Luftloch (121) zu schließen; und
ein Transportelement (142), das dazu konfiguriert ist, das Dichtungselement (141) als Reaktion auf das Steuersignal von der Steuereinheit (130) zu dem Luftloch (121) hin oder von diesem weg zu transportieren,
**dadurch gekennzeichnet, dass** das Transportelement (142) einschließt:
einen Zylinder (144), der dazu konfiguriert ist, als Reaktion auf das Steuersignal von der Steuereinheit (130) eine Welle nach außen zu drücken oder die Welle nach innen zu ziehen; und
einen Dichtungsfixierungsabschnitt (145) an einem Ende der Welle des Zylinders (144), um das Dichtungselement (141) zu fixieren, und
wobei der Batteriepack (100) weiter umfasst:
einen internen Temperatursensor (131), um eine interne Temperatur des Packgehäuses (120) zu erfassen; und
einen externen Temperatursensor (132) zum Erfassen einer Temperatur der Luft außerhalb des Packgehäuses (120),
wobei die Steuereinheit (130) dazu konfiguriert ist, ein erstes Steuersignal an die Belüftungseinheit (140) zu übertragen, um der Belüftungseinheit (140) zu ermöglichen, das Luftloch (121) zu öffnen, wenn ein Unterschied zwischen der von dem internen Temperatursensor (131) gemessenen internen Temperatur des Packgehäuses (120) und der von dem externen Temperatursensor (132) gemessenen externen Temperatur des Packgehäuses (120) gleich oder größer als ein vorbestimmtes Niveau ist.

3. Batteriepack (100) nach Anspruch 1 oder Anspruch 2, wobei die Steuereinheit (130) dazu konfiguriert ist, das erste Steuersignal an die Belüftungseinheit (140) zu übertragen, um der Belüftungseinheit (140) zu ermöglichen, das Luftloch (121) zu öffnen, und nach einer vorbestimmten Zeit ein zweites Steuersignal zu übertragen, um der Belüftungseinheit (140) zu ermöglichen, das Luftloch (121) zu schließen.

4. Batteriepack (100) nach Anspruch 1 oder Anspruch 2, weiter umfassend:
ein Gebläse (150), das dazu konfiguriert ist, Luft im Inneren des Packgehäuses (120) zu transportieren.

5. Batteriepack (100) nach Anspruch 4, wobei das Packgehäuse (120) mindestens zwei Luftlöcher (121) aufweist, und
wobei das Gebläse (150) dazu konfiguriert ist, die Luft im Inneren des Packgehäuses (120) zu transportieren, um die Luft durch ein beliebiges der mindestens zwei Luftlöcher (121) nach außen zu drücken.

6. Fahrzeug (200), umfassend den Batteriepack (100) nach einem der Ansprüche 1 bis 5.

## Revendications

1. Bloc-batterie (100), comprenant :
au moins un module de batterie (110) ;
un boîtier de bloc (120) contenant l'au moins un module de batterie (110), le boîtier de bloc (120) présentant au moins un trou d'air (121) pour permettre à l'air d'entrer et de sortir ;
une unité de commande (130) configurée pour déterminer s'il faut ouvrir ou fermer le trou d'air (121) en fonction d'une différence de température entre l'intérieur et l'extérieur du boîtier de bloc (120) ; et
une unité de ventilation (140) configurée pour ouvrir ou fermer le trou d'air (121) en réponse à un signal de commande provenant de l'unité de commande (130),
dans laquelle l'unité de ventilation (140) inclut :
un élément de garniture (141) présentant une taille qui est égale ou supérieure au trou d'air (121) pour fermer le trou d'air (121) ; et
un élément de transport (142) configuré pour transporter l'élément de garniture (141) vers ou à l'écart du trou d'air (121) en réponse au signal de commande de l'unité de commande (130),
**caractérisé en ce que** l'élément de transport (142) inclut :
un moteur électrique (142a) configuré pour fonctionner en réponse au signal de commande de l'unité de commande (130) ; et
un engrenage de transport (142b) configuré pour transporter l'élément de garniture (141) vers ou à l'écart du trou d'air (121) par une force de rotation transmise par le moteur électrique (142a),
dans lequel une première roue dentée (142a1) se trouve sur un arbre rotatif du moteur électrique (142a),
dans lequel l'engrenage de transport (142b) inclut un corps (142b2) étendu dans une direction et présentant un filetage sur une surface extérieure, et une seconde roue dentée (142b1) à une extrémité du corps (142b2), la seconde roue dentée (142b1) étant en prise avec la première roue dentée (142a1),
dans lequel l'élément de garniture (141) présente un trou de vis (141h) dans lequel le corps (142b2) est inséré, le trou de vis (141h) présentant un filetage sur une surface intérieure,
dans lequel l'unité de ventilation (140) inclut en outre un élément de fixation (143) pour fixer une partie de l'élément de garniture (141) afin d'empêcher l'élément de garniture (141) d'effectuer un mouvement de rotation, et
dans lequel le bloc-batterie (100) comprend en outre :
un capteur de température interne (131) pour détecter une température interne du boîtier de bloc (120) ; et
un capteur de température externe (132) pour détecter la température de l'air à l'extérieur du boîtier de bloc (120),
dans lequel l'unité de commande (130) est configurée pour transmettre un premier signal de commande à l'unité de ventilation (140) pour permettre à l'unité de ventilation (140) d'ouvrir le trou d'air (121) lorsqu'une différence entre la température interne du boîtier de bloc (120) mesurée par le capteur de température interne (131) et la température externe du boîtier de bloc (120) mesurée par le capteur de température externe (132) est égale ou supérieure à un niveau prédéterminé.

2. Bloc-batterie (100), comprenant :
au moins un module de batterie (110) ;
un boîtier de bloc (120) contenant l'au moins un module de batterie (110), le boîtier de bloc (120) présentant au moins un trou d'air (121) pour permettre à l'air d'entrer et de sortir ;
une unité de commande (130) configurée pour déterminer s'il faut ouvrir ou fermer le trou d'air (121) en fonction d'une différence de température entre l'intérieur et l'extérieur du boîtier de bloc (120) ; et
une unité de ventilation (140) configurée pour ouvrir ou fermer le trou d'air (121) en réponse à un signal de commande provenant de l'unité de commande (130),
dans laquelle l'unité de ventilation (140) inclut :
un élément de garniture (141) présentant une taille qui est égale ou supérieure au trou d'air (121) pour fermer le trou d'air (121) ; et
un élément de transport (142) configuré pour transporter l'élément de garniture (141) vers ou à l'écart du trou d'air (121) en réponse au signal de commande de l'unité de commande (130),
**caractérisé en ce que** l'élément de transport (142) inclut :
un vérin (144) configuré pour pousser un arbre vers l'extérieur ou tirer l'arbre vers l'intérieur en réponse au signal de commande de l'unité de commande (130) ; et
une partie de fixation de garniture (145) à une extrémité de l'arbre du vérin (144) pour fixer l'élément de garniture (141), et
dans laquelle le bloc-batterie (100) comprend en outre :
un capteur de température interne (131) pour détecter une température interne du boîtier de bloc (120) ; et
un capteur de température externe (132) pour détecter la température de l'air à l'extérieur du boîtier de bloc (120),
dans laquelle l'unité de commande (130) est configurée pour transmettre un premier signal de commande à l'unité de ventilation (140) pour permettre à l'unité de ventilation (140) d'ouvrir le trou d'air (121) lorsqu'une différence entre la température interne du boîtier de bloc (120) mesurée par le capteur de température interne (131) et la température externe du boîtier de bloc (120) mesurée par le capteur de température externe (132) est égale ou supérieure à un niveau prédéterminé.

3. Bloc-batterie (100) selon la revendication 1 ou la revendication 2, dans laquelle l'unité de commande (130) est configurée pour transmettre le premier signal de commande à l'unité de ventilation (140) afin de permettre à l'unité de ventilation (140) d'ouvrir le trou d'air (121) et, après un temps prédéterminé, pour transmettre un second signal de commande afin de permettre à l'unité de ventilation (140) de fermer le trou d'air (121).

4. Bloc-batterie (100) selon la revendication 1 ou la revendication 2, comprenant en outre :
un ventilateur (150) configuré pour transporter de l'air à l'intérieur du boîtier de bloc (120).

5. Bloc-batterie (100) selon la revendication 4, dans laquelle le boîtier de bloc (120) présente au moins deux trous d'air (121), et
dans laquelle le ventilateur (150) est configuré pour transporter l'air à l'intérieur du boîtier de bloc (120) pour expulser l'air par l'un quelconque des au moins deux trous d'air (121).

6. Véhicule (200) comprenant le bloc-batterie (100) selon l'une quelconque des revendications 1 à 5.
